# EUROPÄISCHE PATENTSCHRIFT

(11) **EP 2 453 152 B1**
(45) Veröffentlichungstag und Bekanntmachung des Hinweises auf die Patenterteilung: **14.05.2014**
(21) Anmeldenummer: 10014489.8
(22) Anmeldetag: 11.11.2010
(51) Int. Cl.: F16K 11/078, E03C 1/044, F24D 1/00, F24D 17/00

(54) **Einhebelmischarmatur mit wählbarem Einstellbereich**
Single lever mix fitting with selectable adjustment range
Mitigeur monocommande doté d'une zone de réglage sélective

(43) Veröffentlichungstag der Anmeldung: 16.05.2012
(73) Patentinhaber: KWC AG, 5726 Unterkulm (CH)
(72) Erfinder: Brunner, Stefan, 5054 Moosleerau (CH); Frey, Joel, 5037 Muhen (CH)
(74) Vertreter: Schaad, Balass, Menzl & Partner AG

(56) Entgegenhaltungen:
- EP-A1- 0 060 481
- EP-A1- 0 392 441
- EP-A2- 2 107 282
- US-A1- 2007 044 850

## Beschreibung

Die vorliegende Erfindung betrifft eine Einhebelmischarmatur gemäss dem Oberbegriff des Patentanspruchs 1.

Eine gattungsgemässe Einhebelmischarmatur mit einer entsprechend ausgebildeten Mischerpatrone ist bekannt aus der EP 2,107,282 A2. In dieser Druckschrift ist der Aufbau der Mischerpatrone, deren Funktionsweise und bevorzugte Verwendung beschrieben. Die Mischerpatrone weist eine Warmwasserzuflussöffnung, eine Kaltwasserzuflussöffnung und eine erste und eine zweite Mischwasserabflussöffnung auf. Das der Mischerpatrone zugeführte Warm- und Kaltwasser wird in der Mischerpatrone gemischt. Je nach Stellung des Stellhebels, in einem ersten Einstellbereich oder in einem zweiten Einstellbereich, wird dieses Mischwasser entweder der ersten oder der zweiten Mischwasserabflussöffnung zugeführt. Die erste Mischwasserabflussöffnung ist vorzugsweise mit einem Auslauf zum Füllen einer Badewanne strömungsverbunden. Die zweite Mischwasserabflussöffnung ist vorzugsweise mit einer Duschbrause strömungsverbunden. Wenn der Stellhebel, ausgehend von einer Ruhestellung, in Richtung des ersten Einstellbereichs bewegt wird, tritt Mischwasser aus der ersten Mischwasserabflussöffnung aus, fliesst in den Auslauf, der zum Füllen der Badewanne verwendet wird, und tritt dort aus. Die Temperatur und der Durchfluss des austretenden Mischwassers sind in diesem ersten Einstellbereich, durch Drehen des Stellhebels um eine Drehachse und Verschwenken des Stellhebels um eine zur Drehachse rechtwinklig verlaufende Schwenkachse, einstellbar. Wenn der Stellhebel, ausgehend von der Ruhestellung, in entgegengesetzter in Richtung bezüglich des ersten Einstellbereichs, in den zweiten Einstellbereichs bewegt wird, tritt Mischwasser aus der zweiten Mischwasserabflussöffnung aus, fliesst in die Duschbrause und tritt dort aus. Die Temperatur des austretenden Mischwassers ist in diesem zweiten Einstellbereich frei wählbar, jedoch ist der Durchfluss konstant.

Untersuchungen haben gezeigt, dass in Haushaltungen das in den meisten Fällen verwendete Warmwasser nicht wärmer als ca. 42°C sein muss. Weiter ist bekannt, dass das Warmoder Heisswasser normalerweise in Boilern auf 60°C oder mehr aufgeheizt wird, obwohl diese Wassertemperatur in den meisten Fällen gar nicht benötigt wird. Es wird also viel Energie in ein System hineingesteckt, obwohl diese Energie schlussendlich gar nicht in diesem Ausmass benötigt wird.

Es ist ohne Probleme möglich, mit herkömmlichen Methoden, wie beispielsweise Erdsonden, Sonnenkollektoren oder Wärmepumpen, Wasser umweltschonend auf ca. 42°C aufzuheizen. Somit besteht grundsätzlich die Möglichkeit einer umweltschonenden Aufwärmung des Warmwassers für die meisten Anwendungszwecke.

Die EP-A-2107282 zeigt die Merkmale des Oberbegriffs des Anspruchs 1.

Ausgehend von diesem Hintergrund liegt der vorliegenden Erfindung die Aufgabe zugrunde, eine Einhebelmischarmatur zur Verfügung zu stellen, die es erlaubt ein Sanitärsystem eines Gebäudes an eine Wasserversorgung anzuschliessen, die eine niedrigere Wasserhöchsttemperatur als üblich(beispielsweise von ca. 42°C) zur Verfügung stellt und es dennoch ermöglicht, falls nötig, auf einfache Art und Weise eine höhere Wassertemperatur des austretenden Wassers einzustellen.

Diese Aufgabe wird mit einer Einhebelmischarmatur gemäss dem Anspruch 1 gelöst.

Die Einhebelmischarmatur weist ein Armaturengehäuse und eine in das Armaturengehäuse eingesetzte, mittels eines Bedienhebels steuerbare Mischerpatrone auf. Bevorzugt wird eine Mischerpatrone wie aus der EP 2,107,282 A2 bekannt, verwendet. Die Mischerpatrone hat eine Warmwasserzuflussöffnung, an die eine Warmwasserleitung - als Zuleitung - anschliessbar ist, eine Kaltwasserzuflussöffnung, an die eine Kaltwasserleitung - als Zuleitung - anschliessbar ist, eine, mit einem Wasserauslauf strömungsverbundene, erste Mischwasserabflussöffnung und eine zweite Mischwasserabflussöffnung. Durch Drehen des Bedienhebels um eine Drehachse, ausgehend von einer Ruhestellung in Richtung eines ersten Einstellbereichs, fliesst Mischwasser aus der ersten Mischwasserabflussöffnung in den Wasserauslauf und tritt dort aus. Dabei tritt durch die zweite Mischwasserabflussöffnung kein Mischwasser aus. Durch Drehen des Bedienhebels um die Drehachse, ausgehend von der Ruhestellung - in entgegengesetzer Richtung - in Richtung eines zweiten Einstellbereichs, fliesst Mischwasser aus der zweiten Mischwasserabflussöffnung aus, wobei die zweite Mischwasserabflussöffnung mit einem Einlass eines Durchlauferhitzers sowie ein Auslass des Durchlauferhitzers mit dem Wasserauslauf strömungsverbunden ist. Dabei tritt durch die erste Mischwasserabflussöffnung kein Mischwasser aus. Das Mischwasser wird, ausgehend von der zweiten Mischwasserabflussöffnung, im Durchlauferhitzer erwärmt. Dieser erfindungsgemässe Aufbau der Einhebelmischarmatur erlaubt es, beim Drehen des Bedienhebels in den ersten Einstellbereich, die Temperatur des Mischwasser wie bekannt einzustellen. Die Höchsttemperatur des austretenden Mischwassers entspricht in diesem ersten Bereich der Temperatur des Warmwassers in der Warmwasserversorgung. Die niedrigste Wassertemperatur entspricht der Wassertemperatur des Kaltwassers in der Kaltwasserversorgung. Zwischen der niedrigsten Wassertemperatur und der Höchsttemperatur kann die Wassertemperatur frei gewählt werden. Die erfindungsgemässe Einhebelmischarmatur erlaubt es also, eine Wasserversorgung mit einer niedrigeren Warmwasserhöchsttemperatur als üblich bereitzustellen. Bei Bedarf ermöglicht es die Einhebelmischarmatur nämlich, das Wasser auf eine höhere Temperatur als die Warmwassertemperatur der Warmwasserversorgung einzustellen; in diesem Fall wird das Mischwasser mittels des Durchlauferhitzers zusätzlich erwärmt.

Wenn ein Benutzer eine höhere Wassertemperatur im zweiten Einstellbereich des austretenden Wassers als die Höchsttemperatur der Warmwasserversorgung einstellen will, dann kann der Bedienhebel in den zweiten Einstellbereich gedreht werden. Wenn sich der Bedienhebel im zweiten Einstellbereich befindet, fliesst das Mischwasser durch die zweite Mischwasserabflussöffnung in den Einlass des Durchlauferhitzers, welcher das ihm zugeführte Mischwasser weiter erwärmt.

Die einstellbare maximale Wasserhöchsttemperatur beträgt vorzugsweise ungefähr 52°C, und die minimale Wassertemperatur vorzugsweise ungefähr 35°C bis 42°C. Dazwischen kann die Wassertemperatur im zweiten Einstellbereich frei gewählt werden.

Eine solche Einhebelmischarmatur erlaubt die Versorgung eines Haushalts mit Warmwasser, welches eine niedrigere Wassertemperatur (ca. 42°C) als üblich aufweist. Gleichzeitig besteht die Möglichkeit dieses Wasser, je nach Bedarf, auf eine höhere Wassertemperatur (ungefähr 52°C) zu erwärmen.

In einer bevorzugten Ausführungsform weist der Durchlauferhitzer eine vorbestimmte, konstante Heizleistung auf.

Dadurch wird der Regelaufwand minimiert.

Die maximale Wassertemperatur kann begrenzt und Verbrennungen des Benutzers durch eine zu hoch gewählte maximale Wassertemperatur können vermieden werden.

Gemäss einer weiteren besonders bevorzugten Ausführungsform erwärmt der Durchlauferhitzer das von der zweiten Mischwasserabflussöffnung zugeführte Mischwasser um 8°C bis 20°C, vorzugsweise um 10°C bis 12°C.

Diese Bereiche entsprechen den in der Praxis ermittelten Werten und erlauben es, einen Durchlauferhitzer mit einer geringen Leistung zu verwenden. Gleichzeitig wird Verbrennungen vorgebeugt.

In einer weiteren bevorzugten Ausführungsform ist im ersten Einstellbereich, durch Schwenken des Bedienhebels um eine Schwenkachse, die vorzugsweise rechtwinklig zur Drehachse verläuft, der Durchfluss bis zu einem Maximalwert, beispielsweise 12 l/min, regulierbar.

Im ersten Einstellbereich kann somit der Durchfluss des Wassers eingestellt werden und zwar stufenlos von 0 l/min bis zu einem Maximalwert von beispielsweise 12 l/min, wie dies aus Einhebelmischarmaturen allgemein bekannt ist.

Gemäss einer weiteren Ausführungsform ist im zweiten Einstellbereich der Durchfluss konstant.

Dies trifft zu, mit Ausnahme in einem Übergangsbereich, durch den der Bedienhebel, ausgehend von der Ruhestellung, beim Öffnen hindurchgedreht wird. In dem Übergangsbereich nimmt der Durchfluss kontinuierlich, ausgehend von 0 l/min auf den konstanten Durchfluss von beispielsweise 4 l/min zu. Im Vergleich zum gesamten Drehwinkelbereich des zweiten Einstellbereichs ist der Übergangsbereich klein.

Der konstante Durchfluss hat den Vorteil, dass durch die vorbestimmte, konstante Heizleitung, die der Durchlauferhitzer erbringt, das Mischwasser um eine definierte, voreingestellte und vor allem kontinuierlich gleichbleibende Temperaturdifferenz erwärmt werden kann. Somit entstehen im zweiten Einstellbereich keine Schwankungen der Wassertemperatur, wenn der Bedienhebel nicht gedreht oder bewegt wird.

Der Durchlauferhitzer wird eingeschaltet, sobald der Durchfluss mehr als beispielsweise 1.2 l/min beträgt.

Das ausfliessende Mischwasser, unter Verwendung des ersten und zweiten Einstellbereichs, kann somit eine Wassertemperatur aufweisen, die in einem Bereich zwischen der Wassertemperatur des zugeführten Kaltwassers und der max. Wassertemperatur des aus dem Durchlauferhitzer austretenden Mischwassers liegt, wobei die Wassertemperatur des Kalt- beziehungsweise Warmwassers in diesem Bereich mit eingeschlossen ist.

Gemäss einer weiteren bevorzugten Ausführungsform ist der konstante Durchfluss im zweiten Einstellbereich kleiner als der Maximalwert im ersten Einstellbereich und beträgt vorzugsweise 1/4 bis 1/2, besonders bevorzugt 1/3 des Maximalwerts.

Der konstante Durchfluss beträgt vorzugsweise ungefähr 4 l/min. Dieser Durchfluss reicht im Normalfall aus.

Bei Bedarf kann dieser Durchfluss jedoch, beispielsweise durch entsprechende Vergrösserung der Durchfluss-Querschnitte der Steuerpatrone und vorzugsweise Anpassung der Leistung des Durchlauferhitzers, auch höher gewählt werden. Weiter ist es denkbar, ein Drosselventil im System oder im Durchlauferhitzer einzubauen.

In einer weiteren bevorzugten Ausführungsform weist das Armaturengehäuse einen Aufnahmeraum auf, der durch einen Zwischenboden begrenzt ist und in dem die Mischerpatrone angeordnet ist. Der Zwischenboden weist vier Durchlässe, einen Kaltwasserdurchlass, der mit der Kaltwasserzuflussöffnung strömungsverbunden ist und an den die Kaltwasserleitung anschliessbar ist, einen Warmwasserdurchlass, der mit der Warmwasserzuflussöffnung strömungsverbunden ist und an den die Warmwasserleitung anschliessbar ist, einen ersten Mischwasserdurchlass, der mit der ersten Mischwasserabflussöffnung und dem Wasserauslauf ströumungsverbunden ist, und einen zweiten Mischwasserdurchlass der mit der zweiten Mischwasserabflussöffnung ströumungsverbunden ist, auf, wobei an den zweiten Mischwasserdurchlass eine, zum Einlass des Durchlauferhitzers führende Mischwasserabflussleitung angeschlossen ist.

Der Zwischenboden vereinfacht den Anschluss der Kalt- und der Warmwasserleitung sowie der Mischwasserabflussleitung.

Weiter ist es denkbar, eine fertige Einhebelmischarmatur bereitzustellen, die je eine an den Zwischenboden angeschlossene Kaltwasser- und Warmwasserleitung aufweist. So wäre es möglich, diese beiden Leitungen, die jeweils am freien Ende Kupplungen aufweisen, direkt an die Wasserversorgung anzuschliessen, ohne dass zuerst Leitungen mühsam an den Zwischenboden angeschlossen werden müssten. Dies vereinfacht die Montage erheblich.

Es können beispielsweise Innengewinde im Zwischenboden angeordnet werden, so dass entsprechende Gewindeanschlüsse verwendet werden können um die Leitungen anzuschliessen.

Weiter hat der Zwischenboden den Vorteil, dass die Mischerpatrone bei der Montage nur auf den Zwischenboden aufgesetzt werden kann, ohne dass die Anschlüsse für die Leitungen an der Mischerpatrone ausgebildet werden müssen.

In der Regel wird die Mischerpatrone dabei, mittels einer Ringmutter, auf den Zwischenboden gedrückt oder gespannt.

Gemäss einer weiteren bevorzugten Ausführungsform weist das Armaturengehäuse ein Innen- und ein Aussengehäuse auf, wobei der Aufnahmeraum sowie der Zwischenboden am Innengehäuse ausgebildet sind und der Wasserauslauf am Aussengehäuse ausgebildet ist. Dabei kann insbesondere das Innengehäuse mehrteilig ausgebildet sein.

Eine solche Ausbildung des Armaturengehäuses erlaubt eine vereinfachte und schnelle Montage der Einhebelmischarmatur.

Es ist auch denkbar, dass der Aufnahmeraum durch das Innen- und das Aussengehäuse gebildet ist.

In einer weiteren bevorzugten Ausführungsform der Einhebelmischarmatur weist der erste Mischwasserdurchlass einen Durchlassabschnitt auf, der in einen, durch das Innengehäuse und das Aussengehäuse begrenzten Ringraum mündet, welcher mit dem Wasserauslauf strömungsverbunden ist.

Der Ringraum erlaubt eine einfache und dichte Strömungsverbindung zwischen dem ersten Mischwasserdurchlass und dem Wasserauslauf.

Weiter ist es durch den Ringraum möglich, den Wasserauslauf drehbar zu lagern, da der Ringraum selbst bei einer Drehbewegung des Wasserauslaufs das Mischwasser an diesen weitergeben kann.

Dieser Durchlassabschnitt ermöglicht es, wenn der Bedienhebel in den ersten Einstellbereich gedreht ist, dem Wasserauslauf über den ersten Mischwasserdurchlass und den Ringraum Mischwasser (bis ca. 42°C Wassertemperatur) aus der Mischerpatrone zuzuführen. Ist der Auslass des Durchlauferhitzers über eine Mischwasserzuflussleitung mit dem ersten Mischwasserdurchlass verbunden, dann wird, wenn der Bedienhebel in den zweiten Einstellbereich gedreht ist, Mischwasser aus dem Durchlauferhitzer (bis ca. 52°C Wassertemperatur) ebenfalls über den Durchlassabschnitt dem Ringraum und dem Wasserauslauf zugeführt.

Gemäss einer weiteren bevorzugten Ausführungsform ist der Wasserauslauf durch eine Ausziehbrause gebildet, wobei diese Ausziehbrause über einen Brauseschlauch mit dem Auslass des Durchlauferhitzers und mit der ersten Mischwasserabflussöffnung strömungsverbunden ist.

Der Brauseschlauch erlaubt es, die Ausziehbrause bei Bedarf aus dem Armaturengehäuse herauszuziehen.

Da der Brauseschlauch mit dem Auslass des Durchlauferhitzers und der ersten Mischwasserabflussöffnung strömungsverbunden ist, kann der Ausziehbrause einerseits Mischwasser aus der Mischerpatrone (erster Einstellbereich, bis beispielsweise ca. 42°C) und andererseits Mischwasser aus dem Durchlauferhitzer (zweiter Einstellbereich, bis beispielsweise ca. 52°C) zugeführt werden.

In einer weiteren bevorzugten Ausführungsform weist die Einhebelmischarmatur ein T-Stück auf, das mit der ersten Mischwasserabflussöffnung, mit dem Auslass des Durchlauferhitzers und, über den Brauseschlauch, mit der Ausziehbrause strömungsverbunden ist.

Das T-Stück ermöglicht eine einfach Verbindung zwischen der Mischwasserabflussöffnung, dem Auslass des Durchlauferhitzers und mit dem Brauseschlauch, sodass je nach Drehung des Bedienhebels Mischwasser aus der Mischerpatrone oder Mischwasser aus dem Durchlauferhitzer in die Ausziehbrause fliesst.

Weiter erlaubt es das T-Stück, die Ausziehbrause beziehungsweise den Brauseschlauch einerseits strömungsverbunden an die Mischwasserabflussöffnung und andererseits strömungsverbunden an den Auslass des Durchlauferhitzers anzuschliessen.

Gemäss einer weiteren bevorzugten Ausführungsform weist die Einhebelmischarmatur ein Rückschlagventil auf, das ein Wasserfluss vom Durchlauferhitzer in Richtung der Ausziehbrause erlaubt, jedoch ein Wasserfluss von der ersten Mischwasserabflussöffnung und dem Brauseschlauch in Richtung des Durchlauferhitzers verhindert.

Wenn der Bedienhebel in den ersten Einstellbereich gedreht ist, verhindert das Rückschlagventil, dass Mischwasser aus der Mischwasserpatrone in den Auslass des Durchlauferhitzers fliessen kann; das Mischwasser gelangt ohne Umwege an die Ausziehbrause. Das Mischwasser kann aber aus dem Auslass des Durchlauferhitzers ungehindert durch das Rückschlagventil fliessen.

Mittels des Rückschlagventils wird somit verhindert, dass im Durchlauferhitzer die Strömungsrichtung umgedreht werden kann und Mischwasser in den Auslass gedrückt wird.

Das Rückschlagventil ist vorzugsweise am T-Stück angeordnet, zwischen dem Auslass des Durchlauferhitzers und dem Eingang in das T-Stück. Es ist auch möglich, das Rückschlagventil in das T-Stück zu integrieren.

Weiter ist es auch denkbar einen Durchlauferhitzer zu verwenden der eine deutliche höhere Heizleistung aufweist. So könnte das durchfliessende Mischwasser um eine wesentliche höhere Temperaturdifferenz als 8°C bis 20°C aufgeheizt werden, womit die Einhebelmischarmatur auch in der Industrie verwendet werden könnte.

Die Erfindung wird anhand der in den Zeichnungen dargestellten Ausführungsbeispiele erläutert. Es zeigen rein schematisch:
- Fig. 1: Eine Einhebelmischarmatur mit einem, fest am Armaturengehäuse angeordneten Wasserauslauf und einem Durchlauferhitzer;
- Fig. 2: eine Draufsicht auf eine Unterseite einer Mischerpatrone gemäss dem Stand der Technik mit einer Kaltwasserzuflussöffnung, einer Warmwasserzuflussöffnung, einer ersten Mischwasserabflussöffnung und einer zweiten Mischwasserabflussöffnung;
- Fig. 3: die Einhebelmischarmatur gemäss Figur 1 mit einer Kalt-, einer Warm- und einer Mischwasserabflussleitung;
- Fig. 4: eine Draufsicht auf einen Vertikalschnitt entlang der Linie IV - IV durch das Armaturengehäuse der Einhebelmischarmatur gemäss Figur 3;
- Fig. 5: eine Draufsicht auf eine Oberseite eines Zwischenbodens mit je einem Kalt- und Warmwasserdurchlass sowie einem ersten und einem zweiten Mischwasserdurchlass;
- Fig. 6: eine Draufsicht auf eine Unterseite des Zwischenbodens mit den Kalt-, Warm- und den beiden Mischwasserdurchlässen;
- Fig. 7: eine Draufsicht auf einen Vertikalschnitt entlang der Linie IV - IV der Einhebelmischarmatur gemäss Figur 1, ohne die Kalt-, Warm- und Mischwasserabflussleitung;
- Fig. 8: eine Draufsicht auf einen Vertikalschnitt entlang der Linie VIII - VIII der Einhebelmischarmatur gemäss Figur 1, ohne die Kalt-, Warm- und Mischwasserabflussleitung;
- Fig. 9: eine Draufsicht auf einen Horizontalschnitt durch den Zwischenboden entlang der Linie VIIII - VIIII aus Figur 7;
- Fig. 10: eine Einhebelmischarmatur mit einer Ausziehbrause und dem Durchlauferhitzer; und
- Fig. 11: eine Draufsicht auf einen Vertikalschnitt entlang der Linie XI - XI durch die Einhebelmischarmatur aus Figur 10 mit Kalt- und Warmwasserleitung.

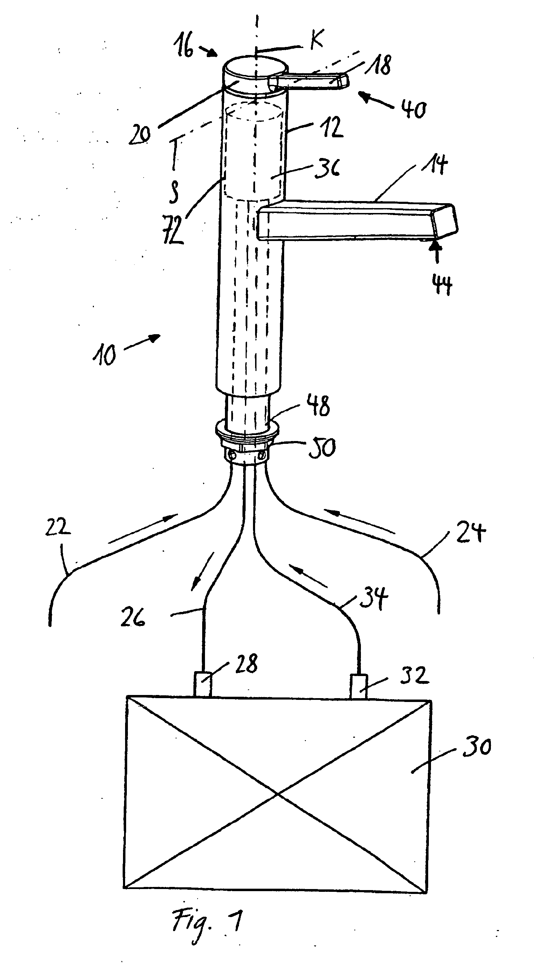

Figur 1 zeigt eine Einhebelmischarmatur 10 mit einem Armaturengehäuse 12 und einem daran angeordneten Wasserauslauf 14. An der Oberseite 16 der Einhebelmischarmatur 10 ist ein Bedienhebel 18 mit einer Abdeckkappe 20 angeordnet. Der Bedienhebel 18 ist, zusammen mit der Abdeckkappe 20, um eine Drehachse K drehbar und um eine zur Drehachse K rechtwinklig verlaufende Schwenkachse S schwenkbar, um die Wassertemperatur einzustellen und den Durchfluss zu regulieren.

Eine Kaltwasserleitung 22 und eine Warmwasserleitung 24 führen in die Einhebelmischarmatur 10 hinein. Eine Mischwasserabflussleitung 26 führt aus der Einhebelmischerarmatur 10 an einen Einlass 28 eines Durchlauferhitzers 30. Von einem Auslass 32 des Durchlauferhitzers 30 führt eine Mischwasserzuflussleitung 34 in die Einhebelmischarmatur 10.

Der Durchlauferhitzer 30 ist beispielsweise ein Modell MDX 3..7 der Firma CLAGE mit einer Nennleistung von 3.5 kW.

Die Kaltwasserleitung 22, die Warmwasserleitung 24 und die Mischwasserabflussleitung 26 sind mit einer Mischerpatrone 36 strömungsverbunden. Die Mischerpatrone 36 ist im Armaturengehäuse 12 angeordnet und über den Bedienhebel 18 steuerbar. Als Mischerpatrone 36 kann beispielsweise das Modell BSD-40 der Firma Kerox verwendet werden. Die Funktionsweise der Mischerpatrone kann der Druckschrift EP 2,107,282 A2 entnommen werden.

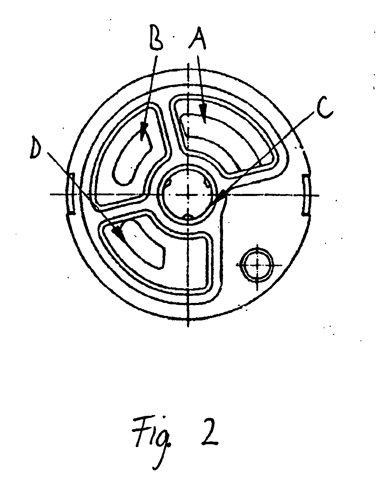

Figur 2 zeigt eine Draufsicht auf eine Unterseite der Mischerpatrone 36 gemäss dem Stand der Technik (EP 2,107,282 A2). Die Mischerpatrone 36 weist eine Kaltwasserzuflussöffnung A (10 in der EP 2,107,282 A2), eine Warmwasserzuflussöffnung B (11 in der EP 2,107,282 A2) und eine erste C und eine zweite Mischwasserabflussöffnung D (12 und 13 in der EP 2,107,282 A2) auf. Die Kaltwasserzuflussöffnung A ist mit der Kaltwasserleitung 22, die Warmwasserzuflussöffnung B mit der Warmwasserleitung 24 und die zweite Mischwasserabflussöffnung D mit der Mischwasserabflussleitung 26 strömungsverbunden. Die erste Mischwasserabflussöffnung C ist mit dem Wasserauslauf 14 strömungsverbunden.

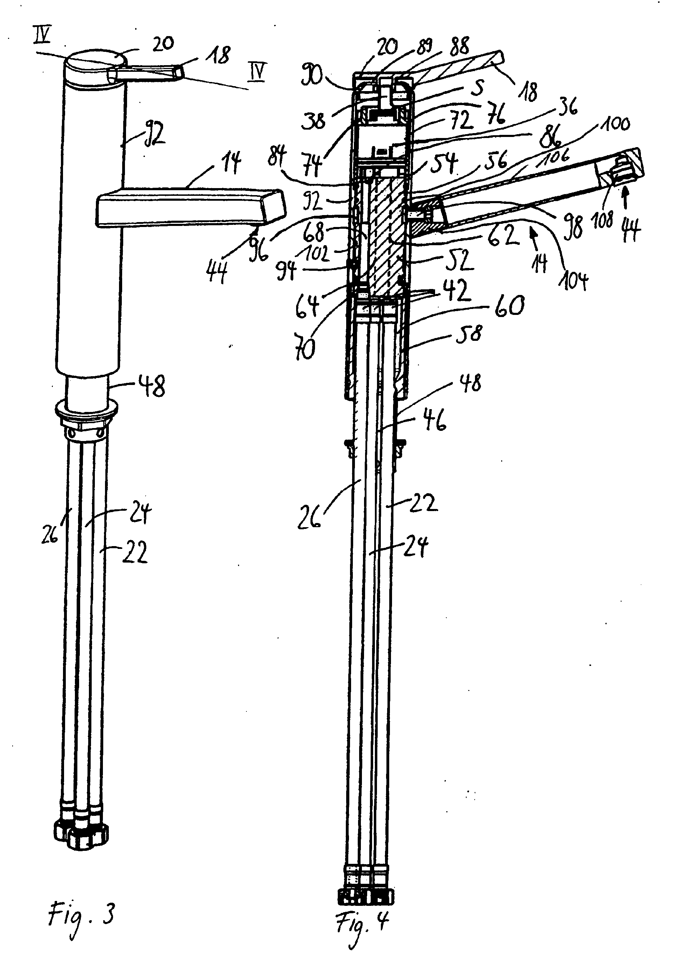

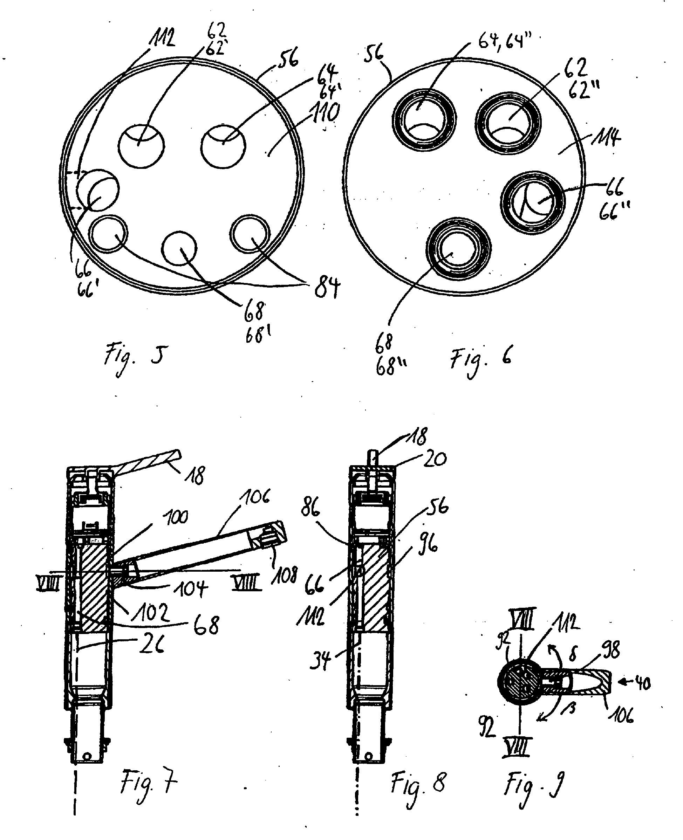

Bei der Verwendung einer solchen oder ähnlichen Mischerpatrone 36 ist der Bedienhebel 18 über einen Stellhebel 38 (in Figur 4 gezeigt) mit der Mischerpatrone 36 verbunden. Der Bedienhebel 18 kann, ausgehend von einer Ruhestellung 40, in einen ersten Einstellbereich β , gezeigt in Figur 9 gedreht werden. In dem ersten Einstellbereich β fliesst Mischwasser, welches in der Mischerpatrone 36 gemischt wird durch die erste Mischwasserabflussöffnung C in den Wasserauslauf 14 und tritt dort aus. In dem ersten Einstellbereich β kann die Wassertemperatur durch Drehung des Bedienhebels 18 um die Drehachse K und der Durchfluss, durch Schwenken des Bedienhebels 18 um die Schwenkachse S, reguliert werden. Der maximal einstellbare Durchfluss beträgt ca. 12 l/min. Die Mischwassertemperatur ist in dem ersten Einstellbereich β, ausgehend von der Ruhestellung 40, zwischen ca. 15°C (Drehwinkel von ca. 1°) bis ca. 42°C (max. Drehwinkel ca. 80°), wählbar. Eine Drehung des Bedienhebels 18 um einen Drehwinkel von mehr als 80° ist durch einen Stopp begrenzt.

Der Bedienhebel 18 kann auch, ausgehend von der Ruhestellung 40 in einen zweiten Einstellbereich δ , gezeigt in Figur 9, gedreht werden. In dem zweiten Einstellbereich δ fliesst Mischwasser, welches in der Mischerpatrone 36 gemischt wird durch die zweite Mischwasserabflussöffnung D und durch die Mischwasserabflussleitung 26 in den Einlass 28 des Durchlauferhitzers 30. Im Durchlauferhitzer 30 wird das Mischwasser erwärmt und durch den Auslass 32 der, mit dem Wasserauslauf 14 strömungsverbundenen, Mischwasserzuflussleitung 34 zugeführt. Das Mischwasser tritt anschliessend durch den Wasserauslauf 14 beziehungsweise durch den Mündungsbereich 44 aus. Im zweiten Einstellbereich δ kann die Wassertemperatur durch Drehung des Bedienhebels 18 um die Drehachse K reguliert werden. Der Durchfluss ist konstant und beträgt ca. 4 l/min. Die Mischwassertemperatur ist in dem zweiten Einstellbereich δ, ausgehend von der Ruhestellung 40, zwischen ca. 35°C (Drehwinkel von ca. 1°) bis ca. 52°C (Drehwinkel von ca. 90°), wählbar.

Der Durchlauferhitzer 30 wird ab einer Durchflussmenge von ca. 1.2 l/min eingeschaltet. Durch die konstante Heizleistung und den konstanten Durchfluss ist es möglich das durchfliessende Mischwasser um ca. 8° bis 20°C zu Erwärmen. Der Durchlauferhitzer 30 ist bei der vorliegenden Erfindung so eingestellt, dass die Temperaturdifferenz zwischen dem in den Durchlauferhitzer 30 eintretenden Mischwasser und dem aus dem Durchlauferhitzer 30 austretenden Mischwasser ungefähr 10°C bis 12° C beträgt.

Die Figur 3 zeigt die Einhebelmischarmatur 10 gemäss Figur 1, jedoch ohne den Durchlauferhitzer 30, dafür mit der Kaltwasserzuflussleitung 22, der Warmwasserzuflussleitung 24 und der Mischwasserabflussleitung 26. Die Leitungen 22, 24, 26 sind mit bekannten Schraubanschlüssen 42 (siehe Figur 3) versehen. Der Wasserauslauf 14 ist ungefähr auf halber Höhe des Armaturengehäuses 12 fest an diesem angeordnet und verläuft leicht schräg in Richtung der Oberseite 16. Ein Mündungsbereich 44 durch den das Mischwasser austritt ist am Wasserauslauf 14 ausgebildet.

Die Leitungen 22, 24, 26 verlaufen in einem Innenbereich 46 (siehe Figur 4) eines Sockelrohrs 48. Am Sockelrohr 48 ist eine Lochmutter 50 angeordnet, mittels der die Einhebelmischarmatur 10, beispielsweise an einem Waschtisch (nicht gezeigt), in bekannter Art und Weise klemmend montiert werden kann.

In Figur 4 ist ein Innengehäuse 52 gezeigt. Das Innengehäuse 52 besteht aus einer ersten Hülse 54, einem Zwischenboden 56 und einer zweiten Hülse 58. Durch die zweite Hülse 58 ist im unteren Bereich der Einhebelmischarmatur 10 ein Hohlraum 60 gebildet, in welchen die Leitungen 22, 24, 26 hineinführen. Die erste Hülse 54 ist über ein Innengewinde am Zwischenboden 56 befestigt. Die zweite Hülse 58 ist über ein Innengewinde das an der zweiten Hülse 58 ausgebildet ist an einem Aussengewinde das am Zwischenboden 56 ausgebildet ist, an diesem befestigt.

Der Hohlraum 60 weist einen runden Querschnitt auf und ist umfangsseitig durch das Innengehäuse 52 beziehungsweise durch die erste Hülse 54 begrenzt. In Richtung des Sockelrohrs 48 ist der Hohlraum 60 offen und in Richtung der Mischerpatrone 36 durch den Zwischenboden 56 begrenzt. Das Sockelrohr 48 ist in ein Innengewinde der zweiten Hülse 58 eingeschraubt.

Die Leitungen 22, 24, 26 sind an der, der Oberseite 16 abgewandten Seite des Zwischenbodens 56 angeschlossen. Der Zwischenboden 56 weist vier Durchlässe auf: Einen Kaltwasserdurchlass 62 der mit der Kaltwasserzuflussöffnung A strömungsverbunden ist und an den die Kaltwasserzuflussleitung 22 angeschlossen ist; einen Warmwasserdurchlass 64 der mit der Warmwasserzuflussöffnung B strömungsverbunden ist und an den die Warmwasserzuflussleitung 24 angeschlossen ist; einen Mischwasserdurchlass 66 der mit der ersten Mischwasserabflussöffnung C und dem Wasserauslauf 14 strömungsverbunden ist, vergleiche Figur 8; und einen zweiten Mischwasserdurchlass 68 der mit der zweiten Mischwasserabflussöffnung D strömungsverbunden ist und an den die Mischwasserabflussleitung 26 angeschlossen ist. Die Mischwasserzuflussleitung 34, die mit dem Auslass 32 des Durchlauferhitzers 30 und dem Wasserauslauf 14 strömungsverbunden ist, ist am zweiten Mischwasserdurchlass 68 des Zwischenbodens 56 angeschlossen. Das Zusammenwirken zwischen der ersten Mischwasserabflussöffnung C, der Mischwasserzuflussleitung 34 und dem Wasserauslauf 14, wird im Zusammenhang mit der Beschreibung der Figur 8 erläutert. Die Leitungen 22, 24, 26, 34 sind über Schraubverbindungen 70 an den jeweiligen Durchlässen am Zwischenboden 56 angeschlossen. Es ist jedoch auch denkbar diese Verbindungen anderweitig auszubilden.

Die Mischerpatrone 36 ist in einen gegen oben offenen Aufnahmeraum 72, der unten durch den Zwischenboden 56 des Innengehäuses 52 und umfangsseitig durch die erste Hülse 54 begrenzt ist, eingesetzt und durch eine Ringmutter 74, die in ein Innengewinde 76, welches an der ersten Hülse 54 ausgebildet ist, eingreift, auf den Zwischenboden 56 gepresst. Dadurch werden die Öffnungen A, B, C, D auf die entsprechenden Durchlässe 62, 64, 66, 68 des Zwischenbodens 56 gepresst und mittels O-Ringdichtungen abgedichtet.

Zwei Positionierborhungen 84 sind im Zwischenboden 56 ausgebildet. Die Positionierborhungen 84 dienen dazu, die Mischerpatrone 36, mittels zwei, entsprechend den Positionierbohrungen 84 ausgebildeten, an der Mischerpatrone 36 angeordneten Positionierstiften 86, in der richtigen Position zu halten. Die Positionierstifte 86 greifen also in die Positionierbohrungen 84 ein.

Der Stellhebel 38 der Mischerpatrone 36 greift in eine Aufnahme 88 an der Abdeckkappe 20 ein und ist mit der Abdeckkappe 20 und dem Bedienhebel 18 fest verbunden. Der Stellhebel 38 durchgreift eine, einen Schlitz 89 aufweisende Schutzkappe 90 und weist einen rechteckigen Querschnitt auf. Der Schlitz 89 in der Schutzkappe 90 erlaubt ein Schwenken des Bedienhebels 18 beziehungsweise des Stellhebels 38 um die Schwenkachse S.

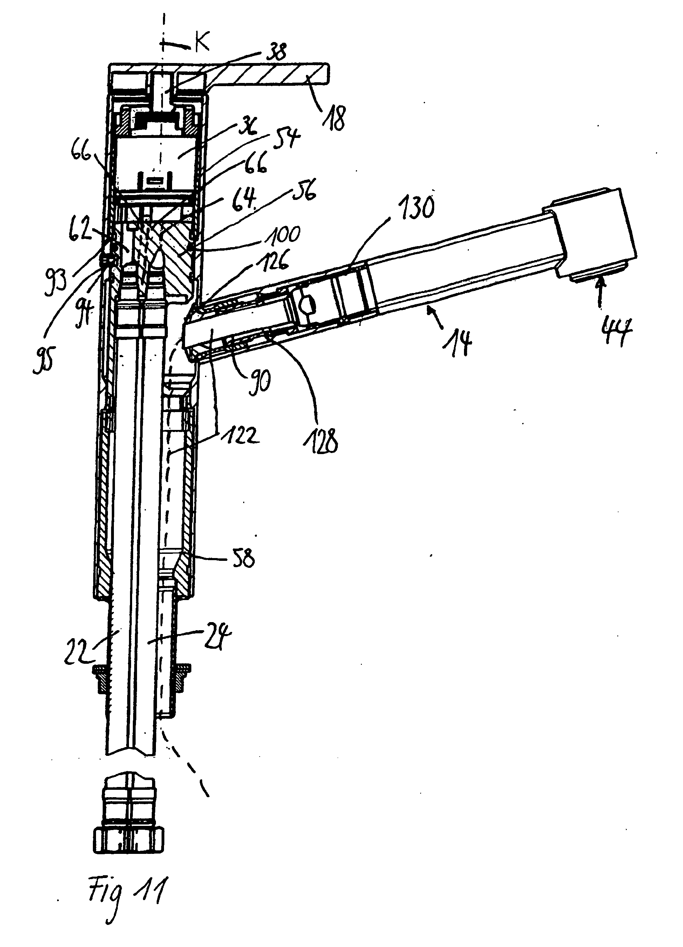

Das Armaturengehäuse 12 weist zusätzlich zum Innengehäuse 52 ein hohlzylinderförmiges Aussengehäuse 92 auf, welches mittels eines Absatzes 93 (vergleiche Figur 11) gebildet durch die erste Hülse 54, am Innengehäuse 52 gehalten ist. Das Aussengehäuse 92 erstreckt sich über das gesamte Innengehäuse 52. An dem Aussengehäuse 92 ist der Wasserauslauf 14 ausgebildet. Eine Madenschraube 94 greift in das Aussengehäuse 92 und in eine am Zwischenboden 56 ausgebildete Nut 95 (vergleiche Figur 11) ein. Durch die Nut 95 wird ein Drehbereich in dem der Wasserauslauf 14 bewegt werden kann, im Uhrzeiger- und im Gegenuhrzeigersinn begrenzt. Es ist auch denkbar, mittels der Madenschraube 94, durch Anziehen derjenigen, eine Drehbewegung des Wasserauslaufs 14 zu unterbinden. Im Bereich des Zwischenbodens 56 ist zwischen dem Innengehäuse 52 und dem Aussengehäuse 92 ein Ringraum 96 gebildet. Der Ringraum 96 verläuft umfangsseitig des Zwischenbodens 56 und ist mit dem Wasserauslauf 14 beziehungsweise mit einem Wasserauslaufrohr 106 des Wasserauslaufs 14, über einen Auslaufdurchlass 98, strömungsverbunden. In Richtung der Mischerpatrone 36 ist der Ringraum 96 mittels einer oberen, in Richtung der Mischerpatrone 36 angeordneten O-Ringdichtung 100 und einer unteren, in Richtung des Sockelrohrs 48 angeordneten O-Ringdichtung 102 abgedichtet. Die O-Ringdichtungen 100, 102 sind ebenfalls zwischen dem Innen- 52 und dem Aussengehäuse 92 angeordnet.

Der Ringraum 96 verbindet den Wasserauslauf 14 über den Auslaufdurchlass 98. Mittels des Ringraums 96 ist es möglich den Wasserauslauf 14 drehbar zu lagern. Der Ringraum 96 ist unabhängig von der Drehposition des Wasserauslaufs 14 mit dem Auslaufdurchlass 98 verbunden.

Am Aussengehäuse 92 ist ein Fortsatz 104 ausgebildet, auf den ein Wasserauslaufrohr 106 aufgeschraubt ist. Der Fortsatz 104 weist den in ungefähr horizontaler Richtung verlaufenden Auslaufdurchlass 98 auf. Am freiliegenden Ende des Wasserauslaufrohrs 106 ist der Mündungsbereich 44 ausgebildet. Der Mündungsbereich 44 weist einen Strahlbildner 108, der in bekannter Art und Weise im Mündungsbereich 44 befestigt ist, auf.

Figur 5 zeigt eine Draufsicht auf eine Oberseite 110 des Zwischenbodens 56 mit dem Kaltwasserdurchlass 62, dem Warmwasserdurchlass 64, dem ersten Mischwasserdurchlass 66 und dem zweiten Mischwasserdurchlass 68. Weiter ist gestrichelt ein Durchlassabschnitt 112 gezeigt. Der Durchlassabschnitt 112 verläuft horizontal, ist ungefähr auf gleicher Höhe wie der Auslaufdurchlass 98 angeordnet und mündet in den Ringraum 96. Weiter sind in Figur 5 die Positionierbohrungen 84 gezeigt. Die Mischerpatrone 36 ist auf die Oberseite 110 des Zwischenbodens 56 gespannt. Die Öffnungen A, B, C, D der Mischerpatrone 36 sind mindestens teilweise deckungsgleich mit den entsprechenden Durchlässen 62, 64, 66, 68 ausgebildet und somit miteinander strömungsverbunden.

Figur 6 zeigt eine Draufsicht auf eine Unterseite 114 des Zwischenbodens 56. Der Kaltwasserdurchlass 62, der Warmwasserdurchlass 64, der erste Mischwasserdurchlass 66 und der zweite Mischwasserdurchlass 68 sind gut erkennbar. Die Durchlässe 62, 64, 66 sind nicht durchgehend gerade ausgebildet, sondern weisen einen Versatz auf. Aus diesem Grund sind bei den Draufsichten in dem Kaltwasser-, dem Warmwasser- und dem ersten Mischwasserdurchlass 66 die Ausgangsöffnungen 62', 64', 66' dieser Durchlässe 62, 64, 66 an der Oberseite 110 des Zwischenbodens 56 angedeutet (siehe Figur 5). Der Versatz ist nötig um die Ausgangsöffnungen 62', 64', 66' an der Oberseite 110 auf die Kaltwasser- A, Warmwasser- B und die beiden Mischwasserabflussöffnungen C, D der Mischerpatrone 36 anzupassen und dementsprechend um die Durchlässe mit den jeweiligen Öffnungen strömungsverbunden auszubilden. Der zweite Mischwasserdurchlass 68 ist gerade gebohrt und weist keinen Versatz auf. Die untenliegenden Ausgänge 62'', 64'', 66'', 68'' der Durchlässe 62, 64, 66, 68 weisen je ein Innengewinde und Dichtflächena auf, damit die Leitungen 22, 24, 26, 34 welche O-Ringdichtungen aufweisen, dichtend angeschlossen werden können.

Diese Durchlässe 62, 64, 66, 68 können beliebig ausgebildet und angeordnet sein. Sie müssen lediglich die oben genannten Bedingungen erfüllen.

Figur 7 zeigt die Einhebelmischarmatur 10 gemäss Figur 1, jedoch ohne angeschlossene Leitungen. Gestrichelt gezeigt ist die Mischwasserabflussleitung 26 die an den zweiten Mischwasserdurchlass 68 angeschlossen ist.

In Figur 8 ist eine Draufsicht auf einen Vertikalschnitt, entlang der Linie VIII - VIII aus Figur 9, gezeigt. Die Kalt- 22, Warm- 24 und Mischwasserabflussleitung 26 sind nicht gezeigt. Die Mischwasserzuflussleitung 34 ist mit einer strich-punktierten Linie angedeutet und an den ersten Mischwasserdurchlass 66 angeschlossen. Weiter ist der horizontale Durchlassabschnitt 112, der mit dem ersten Mischwasserdurchlass 66 und dem Ringraum 96 verbunden ist, gezeigt.

Befindet sich der Bedienhebel 18 in dem ersten Einstellbereich β (siehe Figur 9) so ist die erste Mischwasserabflussöffnung C der Mischerpatrone 36 geöffnet und das Mischwasser fliesst in den ersten Mischwasserdurchlass 66. Vom ersten Mischwasserdurchlass 66 fliesst das Mischwasser in den Durchlassabschnitt 112 und tritt anschliessend, über den Ringraum 96, den Auslassdurchlass 98 und das Wasserauslaufrohr 106 durch den Strahlbildner 108 aus dem Mündungsbereich 44 aus. Die zweite Mischwasserabflussöffnung D der Mischerpatrone 36 ist geschlossen, somit kann das Mischwasser nicht durch den untenliegenden Ausgang 66" in die Mischwasserzuflussleitung 34 und über den Durchlauferhitzer 30 in die Mischwasserabflussleitung 26 fliessen.

Befindet sich der Bedienhebel 18 in dem zweiten Einstellbereich δ (siehe Figur 9), so ist die zweite Mischwasserabflussöffnung D der Mischerpatrone 36 geöffnet und das Mischwasser fliesst durch den zweiten Mischwasserdurchlass 68 in die Mischwasserabflussleitung 26, die in den Einlass des Durchlauferhitzers 30 führt. Das Mischwasser wird im Durchlauferhitzer 30 erwärmt und fliesst anschliessend durch den Auslass 32 in die Mischwasserzuflussleitung 34 und von da in den ersten Mischwasserdurchlass 68. Da die erste Mischwasserabflussöffnung C der Mischerpatrone 36 geschlossen ist, kann das erwärmte Mischwasser nur durch den Durchlassabschnitt 112 heraus in den Ringraum 96 fliessen. Anschliessend tritt das erwärmte Mischwasser, wie oben beschrieben, im Mündungsbereich 44 als Mischwasser, das eine Wassertemperatur von ca. 35°C bis ca. 52°C aufweist (je nach der Wassertemperatur des in den Durchlauferhitzer 30 einfliessenden Mischwassers und somit je nach der Position des Bedienhebels 18), aus.

In Figur 9 ist eine Draufsicht auf einen Horizontalschnitt durch den Zwischenboden, entlang der Linie VIIII - VIIII aus Figur 7, gezeigt. Der Durchlassabschnitt 112 ist gut erkennbar. Weiter sind der erste und der zweite Einstellbereich in welche der Bedienhebel 18 gedreht werden kann mit β und δ angedeutet. Der erste Einstellbereich β deckt einen Drehwinkelbereich von 0° bis 80° ab; der zweite Einstellbereich δ einen Drehwinkelbereich von 0° bis 90°. Der erste Einstellbereich β entspricht einer Drehung des Bedienhebels 18, ausgehend von der Ruhestellung 40, im Uhrzeigersinn und der zweite Einstellbereich δ entspricht einer Drehung des Bedienhebels 18, ausgehend von der Ruhestellung 40, im Gegenuhrzeigersinn. In der Ruhestellung 40 rastet der Bedienhebel 18 mit einem Klick ein, sodass wenn dieser aus der Ruhestellung 40 heraus bewegt werden soll ein vergleichsweise kleiner Kraftaufwand erforderlich ist.

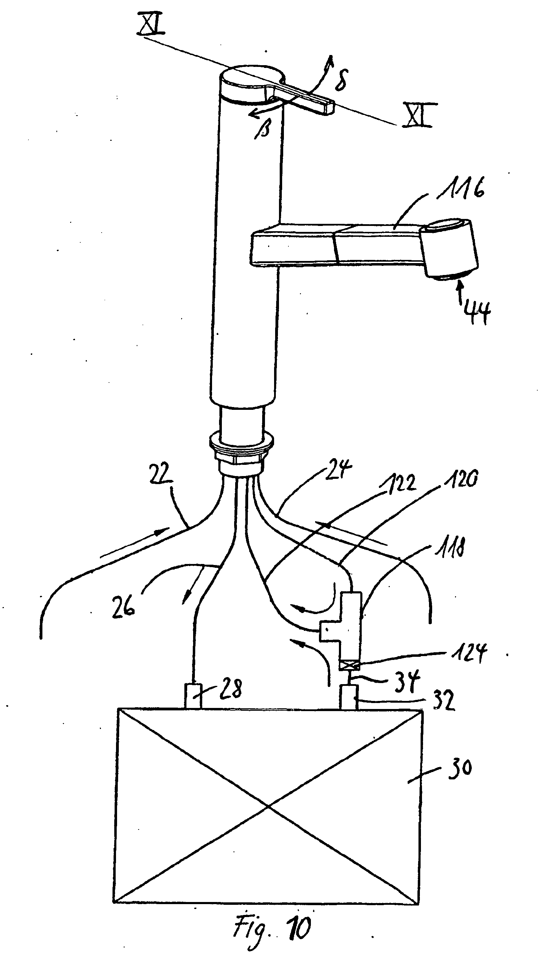

Figur 10 zeigt eine Einhebelmischarmatur 10 mit einer Ausziehbrause 116 und dem Durchlauferhitzer 30. Im Unterschied zu der in Figur 1 und 3 bis 9 gezeigten Ausführungsform der Einhebelmischarmatur 10 wird die Mischwasserzufuhr an die Ausziehbrause 116 über ein T-Stück 118 und nicht über den Ringraum 96 erreicht. Die Kaltwasserzuflussleitung 22, die Warmwasserzuflussleitung 24 und die Mischwasserabflussleitung 26 sind wie bereits erläutert angeschlossen.

An dem T-Stück 118 ist eine Mischwasserleitung 120, die mit dem ersten Mischwasserdurchlass 66 (siehe Figur 10) und somit mit der ersten Mischwasserabflussöffnung C der Mischerpatrone 36 strömungsverbunden ist, angeschlossen. Weiter ist an dem T-Stück 118 ein Brauseschlauch 122, der das T-Stück 118 mit der Ausziehbrause 116 verbindet, und die Mischwasserzuflussleitung 34 angeschlossen. Zwischen dem T-Stück 118 und dem Auslass 32 des Durchlauferhitzers 30 ist ein Rückschlagventil 124 angeordnet. Dieses Rückschlagventil 124 erlaubt den Mischwasserfluss vom Auslass 32 in Richtung des Brauseschlauchs 122, verhindert jedoch den Mischwasserfluss vom Brauseschlauch 122 beziehungsweise von der Mischwasserleitung 120 in Richtung des Auslasses 32 des Durchlauferhitzers 30.

Wenn sich der Bedienhebel 18 im ersten Einstellbereich β befindet, fliesst das Mischwasser aus der ersten Mischwasserabflussöffnung C der Mischwasserpatrone 36 durch den ersten Mischwasserdurchlass 66 in die Mischwasserleitung 120. Von der Mischwasserleitung 120 gelangt das Mischwasser durch das T-Stück 118 in den Brauseschlauch 122 und von da in die Ausziehbrause 116 wo es anschliessend aus dem Mündungsbereich 44 austritt. Das Rückschlagventil 124 verhindert, dass das Mischwasser in Richtung des Durchlauferhitzers 30 ausweichen kann.

Wenn sich der Bedienhebel 18 im zweiten Einstellbereich δ befindet, fliesst das Mischwasser aus der zweiten Mischwasserabflussöffnung D der Mischwasserpatrone 36 durch den zweiten Mischwasserdurchlass 68 in die Mischwasserabflussleitung 34 und über den Einlass 28 in den Durchlauferhitzer 30. Anschliessend fliesst das Mischwasser vom Durchlauferhitzer 30 durch die Mischwasserzuflussleitung 34 und das Rückschlagventil 124 in den Brauseschlauch 122 und von da in die Ausziehbrause 116 wo es anschliessend aus dem Mündungsbereich 44 austritt. Wenn sich der Bedienhebel 18 im zweiten Einstellbereich δ befindet, ist die erste Mischwasserabflussöffnung geschlossen. Somit kann das Mischwasser im T-Stück 118 nicht in die Mischwasserleitung 120 fliessen, sondern wird anstelle in den Brauseschlauch 122 und in die Ausziehbrause 116 geleitet.

In Figur 11 ist eine Draufsicht auf einen Vertikalschnitt entlang der Linie XI - XI aus Figur 10 gezeigt. Die Kaltwasserleitung 22 und die Warmwasserleitung 24 sind gut erkennbar. Die Durchlässe 62, 64, 66, 68 weisen ebenfalls einen Versatz auf und sind nicht parallel zur Drehachse K, sondern schräg dazu ausgebildet. Dies weil auf der Seite des Zwischenbodens 56, die der Ausziehbrause 116 zugewandt ist, ein Freiraum 126 ausgebildet ist. Durch diesen Freiraum 126 wird der Brauseschlauch 122 (in Figur 10 gestrichelt gezeigt) geführt und an die Ausziehbrause 116 angeschlossen. Der Anschluss des Brauseschlauchs 122 an die Ausziehbrause 100 erfolgt in bekannter Art und Weise. Der Fortsatz 90 bildet dabei einen Sockel 128 in ein entsprechend ausgebildetes Gegenstück 130 der Ausziehbrause 116 eingreift.

Der Kaltwasserdurchlass 62 ist in Figur 11 gezeigt. Der Warmwasserdurchlass 64 und der erste Mischwasserdurchlass 66 sind gestrichelt angedeutet. Da bei dieser Ausführungsform kein Ringraum 96 benötigt wird, ist nur eine obere O-Ringdichtung 100 zwischen dem Zwischenboden 56 und dem Aussengehäuse 92 angeordnet.

Der Freiraum 126 ist so ausgebildet, dass er eine Drehung des Wasserauslaufs 14 in dem Drehbereich, der durch die Madenschraube 94 im Zusammenwirken mit der Nut 95 begrenzt ist, erlaubt. Durch die Wahl eines flexiblen Materials zur Herstellung des Brauseschlauchs 122 ist eine Drehbewegung des Wasserauslaufs 14 möglich.

Ausgehend von der Ruhestellung 40 kann der Bedienhebel 18 also im Uhrzeigersinn in den ersten Einstellbereich β um die Drehachse K gedreht werden. In diesem ersten Einstellbereich β kann die Temperatur des austretenden Mischwassers zwischen einem Minimalwert, der der Wassertemperatur des Wassers in der Kaltwasserleitung 22 entspricht (Drehwinkel ab 0°) und einer Wasserhöchsttemperatur die dem Wasser in der Warmwasserleitung 24 beziehungsweise der Warmwasserversorgung entspricht (Drehwinkel im Bereich bis 80°) gewählt werden. Dazwischen kann die Wassertemperatur des austretenden Mischwassers frei gewählt werden.

Im ersten Einstellbereich β kann weiter der Durchfluss, durch Hochschwenken des Bedienhebels 18, erhöht werden. Dies ausgehend von 0 l/min bis zu einem Maximalwert von ca. 12 l/min.

Ausgehend von der Ruhestellung 40 kann der Bedienhebel 18 auch im Gegenuhrzeigersinn in den zweiten Einstellbereich δ um die Drehachse K gedreht werden. Die Wassertemperatur des austretenden Mischwassers, welches im zweiten Einstellbereich δ durch den Durchlauferhitzer 30 fliesst, kann ausgehend von ca. 35°C (Drehwinkel ab 0°) bis mehr als ca. 52°C (Drehwinkel im Bereich bis 90°) eingestellt werden. Im zweiten Einstellbereich δ ist der Durchfluss konstant.

Die beschriebene Einhebelmischarmatur 10 erlaubt es also, die Warmwassertemperatur einer Warmwasserversorgung eines Haushalts mit einer niedrigeren Wasserhöchsttemperatur als üblich auszubilden. Dadurch können umweltschonende Methoden, wie beispielsweise Sonnenkollektoren, Wärmepumpen und Erdsonden, zum Aufwärmen des Warmwassers verwendet werden. Bei Bedarf ist es mit der Einhebelmischarmatur 10 dennoch möglich, eine höhere Höchsttemperatur des Warmwassers einzustellen als die Wasserhöchsttemperatur des Warmwassers in der Warmwasserleitung 24 beziehungsweise in der Warmwasserversorgung.

## Patentansprüche

1. Einhebelmischarmatur mit einem Armaturengehäuse (12), einer im Armaturengehäuse (12) eingesetzten, mittels eines Bedienhebels (18) steuerbaren Mischerpatrone (36) mit einer Warmwasserzuflussöffnung (B), an die eine Warmwasserleitung (24) anschliessbar ist, einer Kaltwasserzuflussöffnung (A), an die eine Kaltwasserleitung (22) anschliessbar ist, einer, mit einem Wasserauslauf (14) strömungsverbundenen, ersten Mischwasserabflussöffnung (C) und einer zweiten Mischwasserabflussöffnung (D), wobei durch Drehen des Bedienhebels (18) um eine Drehachse (K), ausgehend von einer Ruhestellung (40) in Richtung eines ersten Einstellbereichs β, Mischwasser aus der ersten Mischwasserabflussöffnung (C) in den Wasserauslauf (14) fliesst und dort austritt und wobei durch Drehen des Bedienhebels (18) um die Drehachse (K), ausgehend von der Ruhestellung (40) in Richtung eines zweiten Einstellbereichs δ, Mischwasser aus der zweiten Mischwasserabflussöffnung (D) austritt, **dadurch gekennzeichnet, dass** die zweite Mischwasserabflussöffnung (D) mit einem Einlass (28) eines Durchlauferhitzers (30) sowie ein Auslass (32) des Durchlauferhitzers (30) mit dem Wasserauslauf (14) strömungsverbunden ist und das von der zweiten Mischwasserabflussöffnung (D) zugeführte Mischwasser im Durchlauferhitzer (30) erwärmt wird.

2. Einhebelmischarmatur gemäss Anspruch 1, **dadurch gekennzeichnet, dass** der Durchlauferhitzer (30) eine vorbestimmte, vorzugsweise konstante, Heizleistung aufweist.

3. Einhebelmischarmatur gemäss Anspruch 1 oder 2, **dadurch gekennzeichnet, dass** der Durchlauferhitzer (30), das von der zweiten Miachwasserabflussöffnung (D) zugeführte Mischwasser um 8°C bis 20°C, vorzugsweise um 10°C bis 12°C, erwärmt.

4. Einhebelmischarmatur gemäss einem der Ansprüche 1 bis 3, **dadurch gekennzeichnet, dass** im ersten Einstellbereich β, durch Schwenken des Bedienhebels (18) um eine Schwenkachse S, die vorzugsweise rechtwinklig zur Drehachse (K) verläuft, der Durchfluss bis zu einem Maximalwert, beispielsweise 12 1/min, regulierbar ist.

5. Einhebelmischarmatur gemäss einem der Ansprüche 1 bis 4, **dadurch gekennzeichnet, dass** im zweiten Einstellbereich δ der Durchfluss konstant ist.

6. Einhebelmischarmatur gemäss Anspruch 4 und 5, **dadurch gekennzeichnet, dass** der konstante Durchfluss kleiner ist als der Maximalwert und vorzugsweise 1/4 bis 1/2, besonders bevorzugt 1/3 des Maximalwerts beträgt.

7. Einhebelmischarmatur gemäss einem der Ansprüche 1 bis 6, **dadurch gekennzeichnet, dass** das Armaturengehäuse (12) einen Aufnahmeraum (72) aufweist, der durch einen Zwischenboden (56) begrenzt ist und in dem die Mischerpatrone (36) angeordnet ist, wobei der Zwischenboden (56) vier Durchlässe, einen Kaltwasserdurchlass (62), der mit der Kaltwasserzuflussöffnung (A) strömungsverbunden und an den die Kaltwasserleitung (22) anschliessbar ist, einen Warmwasserdurchlass (64), der mit der Warmwasserzuflussöffnung (B) strömungsverbunden und an den die warmwasserleitung (24) anschliessbar ist, einen ersten Mischwasserdurchlass (66), der mit der ersten Mischwasserabflussöffnung (C) und dem Wasserauslauf (14) ströumungsverbunden ist, und einen zweiten Mischwasserdurchlass (68), der mit der zweiten Mischwasserabflussöffnung (D) ströumungsverbunden und an den eine zum Einlass (28) des Durchlauferhitzers (30) führende Mischwasserabflussleitung (26) angeschlossen ist, aufweist.

8. Einhebelmischarmatur gemäss Anspruch 7, **dadurch gekennzeichnet, dass** das Armaturengehäuse (12) ein Innen- (52) und ein Aussengehäuse (92) aufweist, wobei der Aufnahmeraum (72) sowie der Zwischenboden (56) am Innengehäuse (52) ausgebildet sind und der Wasserauslauf (14) am Aussengehäuse (92) angeordnet ist.

9. Einhebelmischarmatur gemäss Anspruch 7 oder 8, **dadurch gekennzeichnet, dass** der erste Mischwasserdurchlass (66) einen Durchlassabschnitt (112) aufweist, der in einen, durch das Innengehäuse (52) und das Aussengehäuse (92) begrenzten Ringraum (96) mündet, welcher mit dem Wasserauslauf (14) strömungsverbunden ist.

10. Einhebelmischarmatur gemäss einem der Ansprüche 1 bis 8, **dadurch gekennzeichnet, dass** der Wasserauslauf (14) durch eine Ausziehbrause (116) gebildet ist und diese über einen Brauseschlauch (122) mit dem Auslass (32) des Durchlauferhitzers (30) und mit der ersten Misehwasserabflussöffnung (C) strömungsverbunden ist.

11. Einhebelmischarmatur gemäss Anspruch 10, **gekennzeichnet durch** ein T-Stück (118), das mit der ersten Mischwasserabflussöffnung (C), mit dem Auslass (32) des Durchlauferhitzers (30) und, über den Brauseschlauch (122), mit der Ausziehbrause (116) strömungsverbunden ist.

12. Einhebelmischarmatur gemäss Anspruch 11 **gekennzeichnet durch** ein Rückschlagventil (124), das ein Wasserfluss vom Durchlauferhitzer (30) in Richtung der Ausziehbrause (116) erlaubt, jedoch ein Wasserfluss von der ersten Mischwasserabflussöffnung (C) und dem Brauseschlauch (122) in Richtung des Durchlauferhitzers (30) verhindert.

## Claims

1. Single lever mixer fitting with a fitting housing (12), a mixer cartridge (36) which is inserted in the fitting housing (12), is controllable by means of an operating lever (18) and has a hot water inflow opening (B) to which a hot water pipe (24) can be connected, a cold water inflow opening (A) to which a cold water pipe (22) can be connected, a first mixed water outflow opening (C) which is connected in terms of flow to a water outlet (14), and a second mixed water outflow opening (D), wherein, by rotation of the operating lever (18) about an axis of rotation (K), from an inoperative position (40) in the direction of a first adjustment range β, mixed water flows out of the first mixed water outflow opening (C) into the water outlet (14) and exits therefrom, and wherein, by rotation of the operating lever (18) about the axis of rotation (K), from the inoperative position (40) in the direction of a second adjustment range δ, mixed water exits from the second mixed water outflow opening (D), **characterized in that** the second mixed water outflow opening (D) is connected in terms of flow to an inlet (28) of an instantaneous water heater (30), and also an outlet (32) of the instantaneous water heater (30) is connected in terms of flow to the water outlet (14), and the mixed water supplied by the second mixed water outflow opening (D) is heated in the instantaneous water heater (30).

2. Single lever mixer fitting according to Claim 1, **characterized in that** the instantaneous water heater (30) has a predetermined, preferably constant, heating capacity.

3. Single lever mixer fitting according to Claim 1 or 2, **characterized in that** the instantaneous water heater (30) heats the mixed water supplied by the second mixed water outflow opening (D) by 8°C to 20°C, preferably by 10°C to 12°C.

4. Single lever mixer fitting according to one of Claims 1 to 3, **characterized in that** in the first adjustment range β, by pivoting of the operating lever (18) about a pivot axis S which preferably runs at a right angle to the axis of rotation (K), the volumetric flow rate is adjustable up to a maximum value, for example 12 1/min.

5. Single lever mixer fitting according to one of Claims 1 to 4, **characterized in that** in the second adjustment range δ, the volumetric flow rate is constant.

6. Single lever mixer fitting according to Claims 4 and 5, **characterized in that** the constant volumetric flow rate is less than the maximum value and is preferably 1/4 to 1/2, particularly preferably 1/3, of the maximum value.

7. Single lever mixer fitting according to one of Claims 1 to 6, **characterized in that** the fitting housing (12) has a receiving space (72) which is bounded by an intermediate bottom (56) and in which the mixer cartridge (36) is arranged, wherein the intermediate bottom (56) has four passages, a cold water passage (62) which is connected in terms of flow to the cold water inflow opening (A) and to which the cold water pipe (22) can be connected, a hot water passage (64) which is connected in terms of flow to the hot water inflow opening (B) and to which the hot water pipe (24) can be connected, a first mixed water passage (66) which is connected in terms of flow to the first mixed water outflow opening (C) and to the water outlet (14), and a second mixed water passage (68) which is connected in terms of flow to the second mixed water outflow opening (D) and to which a mixed water outflow pipe (26) leading to the inlet (28) of the instantaneous water heater (30) is connected.

8. Single lever mixer fitting according to Claim 7, **characterized in that** the fitting housing (12) has an inner housing (52) and an outer housing (92), wherein the receiving space (72) and the intermediate bottom (56) are formed on the inner housing (52) and the water outlet (14) is arranged on the outer housing (92).

9. Single lever mixer fitting according to Claim 7 or 8, **characterized in that** the first mixed water passage (66) has a passage section (112) which opens into an annular space (96) which is bounded by the inner housing (52) and the outer housing (92) and is connected in terms of flow to the water outlet (14).

10. Single lever mixer fitting according to one of Claims 1 to 8, **characterized in that** the water outlet (14) is formed by an extendable shower (116) and the latter is connected in terms of flow via a shower hose (122) to the outlet (32) of the instantaneous water heater (30) and to the first mixed water outflow opening (C).

11. Single lever mixer fitting according to Claim 10, **characterized by** a T piece (118) which is connected in terms of flow to the first mixed water outflow opening (C), to the outlet (32) of the instantaneous water heater (30) and, via the shower hose (122), to the extendable shower (116).

12. Single lever mixer fitting according to Claim 11, **characterized by** a non-return valve (124) which permits a flow of water from the instantaneous water heater (30) in the direction of the extendable shower (116), but prevents a flow of water from the first mixed water outflow opening (C) and the shower hose (122) in the direction of the instantaneous water heater (30).

## Revendications

1. Mitigeur monocommande avec un corps d'armature (12), une cartouche de mitigeur (36) introduite dans le corps d'armature (12) et pouvant être commandée au moyen d'un levier de commande (18), présentant un orifice d'arrivée d'eau chaude (B) auquel une conduite d'eau chaude (24) peut être raccordée, un orifice d'arrivée d'eau froide (A) auquel une conduite d'eau froide (22) peut être raccordée, avec un premier orifice d'écoulement d'eau mélangée (C) en communication d'écoulement avec une sortie d'eau (14) et un deuxième orifice d'écoulement d'eau mélangée (D), dans lequel, par la rotation du levier de commande (18) autour d'un axe de rotation (K), depuis une position de repos (40) en direction d'une première zone de réglage β, il coule depuis le premier orifice d'écoulement d'eau mélangée (C) dans la sortie d'eau (14) et elle sort de celle-ci, et dans lequel, par la rotation du levier de commande (18) autour de l'axe de rotation (K), depuis la position de repos (40) en direction d'une deuxième zone de réglage δ, de l'eau mélangée provenant de la conduite d'eau froide (22) et de la conduite d'eau chaude (24) sort du deuxième orifice d'écoulement d'eau mélangée (D), **caractérisé en ce que** le deuxième orifice d'écoulement d'eau mélangée (D) est raccordé en écoulement à une entrée (28) d'un réchauffeur continu (30) et une sortie (32) du réchauffeur continu (30) est raccordée en écoulement à la sortie d'eau (14) et l'eau mélangée fournie par le deuxième orifice d'écoulement d'eau mélangée (D) est chauffée dans le réchauffeur continu (30).

2. Mitigeur monocommande selon la revendication 1, **caractérisé en ce que** le réchauffeur continu (30) présente une puissance de chauffage prédéterminée, de préférence constante.

3. Mitigeur monocommande selon la revendication 1 ou 2, **caractérisé en ce que** le réchauffeur continu (30) chauffe l'eau mélangée, qui est fournie par le deuxième orifice d'écoulement d'eau mélangée (D), de 8°C à 20°C, de préférence de 10°C à 12°C.

4. Mitigeur monocommande selon l'une quelconque des revendications 1 à 3, **caractérisé en ce que** dans la première zone de réglage β, par pivotement du levier de commande (18) autour d'un axe de pivotement S, qui est de préférence perpendiculaire à l'axe de rotation (K), le débit peut être réglé à une valeur maximale, par exemple 12 1/min.

5. Mitigeur monocommande selon l'une quelconque des revendications 1 à 4, **caractérisé en ce que** dans la deuxième zone de réglage δ, le débit est constant.

6. Mitigeur monocommande selon les revendications 4 et 5, **caractérisé en ce que** le débit constant est inférieur à la valeur maximale et est de préférence 1/4 à 1/2, préférence en particulier 1/3, de la valeur maximale.

7. Mitigeur monocommande selon l'une quelconque des revendications 1 à 6, **caractérisé en ce que** le corps d'armature (12) présente une chambre de réception (72), qui est limitée par un fond intermédiaire (56) et dans laquelle la cartouche de mitigeur (36) est disposée, dans lequel le fond intermédiaire (56) présente quatre passages, un passage d'eau froide (62) qui est raccordé en écoulement à l'orifice d'arrivée d'eau froide (A) et auquel la conduite d'eau froide (22) peut être raccordée, un passage d'eau chaude (64), qui est raccordé en écoulement à l'orifice d'arrivée d'eau chaude (B) et auquel la conduite d'eau chaude (24) peut être raccordée, un premier passage d'eau mélangée (66) qui est raccordé en écoulement au premier orifice d'écoulement d'eau mélangée (C) et à la sortie d'eau (14), et un deuxième passage d'eau mélangée (68), qui est raccordé en écoulement au deuxième orifice d'écoulement d'eau mélangée (D) et auquel une conduite d'écoulement d'eau mélangée (26) conduisant à l'entrée (28) du réchauffeur continu (30) est raccordée.

8. Mitigeur monocommande selon la revendication 7, **caractérisé en ce que** le corps d'armature (12) présente un corps intérieur (52) et un corps extérieur (92), dans lequel la chambre de réception (72) ainsi que le fond intermédiaire (56) sont formés sur le corps intérieur (52) et la sortie d'eau (14) est disposée sur le corps extérieur (92).

9. Mitigeur monocommande selon la revendication 7 ou 8, **caractérisé en ce que** le premier passage d'eau mélangée (66) présente une partie de passage (112), qui débouche dans une chambre annulaire (96) délimitée par le corps intérieur (52) et le corps extérieur (92), et qui est raccordée en écoulement à la sortie d'eau (14).

10. Mitigeur monocommande selon l'une quelconque des revendications 1 à 8, **caractérisé en ce que** la sortie d'eau (14) est formée par une douchette extensible (116) et celle-ci est raccordée en écoulement par un tuyau de douchette (122) à la sortie (32) du réchauffeur continu (30) et au premier orifice d'écoulement d'eau mélangée (C).

11. Mitigeur monocommande selon la revendication 10, **caractérisé par** une pièce en T (118), qui est raccordée en écoulement au premier orifice d'écoulement d'eau mélangée (C), à la sortie (32) du réchauffeur continu (30) et, par l'intermédiaire du tuyau de douchette (122), à la douchette extensible (116).

12. Mitigeur monocommande selon la revendication 11, **caractérisé par** une soupape anti-retour (124), qui permet un écoulement d'eau du réchauffeur continu (30) en direction de la douchette extensible (116), mais qui empêche un écoulement d'eau du premier orifice d'écoulement d'eau mélangée (C) et du tuyau de douchette (122) en direction du réchauffeur continu (30).
